# EUROPÄISCHE PATENTANMELDUNG

(11) **EP 4 541 457 A1**
(43) Veröffentlichungstag der Anmeldung: **23.04.2025**
(21) Anmeldenummer: 23204768.8
(22) Anmeldetag: 20.10.2023
(51) Int. Cl.: B01J 8/02, C01B 3/36, C01B 3/38

(54) **OXIDATIONSREAKTOR ZUR PARTIALOXIDATION EINES EINSATZSTROMS MIT FEUERFESTER SCHUTZSCHICHT**

(71) Anmelder: L'AIR LIQUIDE, SOCIETE ANONYME POUR L'ETUDE ET L'EXPLOITATION DES PROCEDES GEORGES CLAUDE, 75007 Paris (FR)
(72) Erfinder: Jarolin, Kolja, 60439 Frankfurt am Main (DE); Coscia, Antonio, 60439 Frankfurt am Main (DE)
(74) Vertreter: Air Liquide

(57) **Zusammenfassung**

Die Erfindung betrifft einen Oxidationsreaktor zur Partialoxidation eines Einsatzstroms mit einem Sauerstoff enthaltenden Oxidationsmittelstrom zu einem Wasserstoff enthaltenden Produktstrom. Die Partialoxidation kann dabei als nichtkatalytische Partialoxidation (POX) oder als autothermes Reformieren (ATR) durchgeführt werden. Als Einsatzströme kommen dabei kohlenwasserstoffhaltige Ströme, aber auch Ammoniak enthaltende Ströme in Frage. Erfindungsgemäß ist der Oxidationsreaktor innerhalb des drucktragenden Reaktormantels mit einer Schutzschicht aus feuerfesten Ziegeln versehen, wobei die Ziegel in der mindestens einen Schutzschicht so angebracht sind, dass die Schutzschicht bei thermischer Expansion in Radialrichtung bewegbar ist. Hierdurch wird die Zerstörung der Ziegel durch thermische Ausdehnung wirkungsvoll verhindert oder zumindest minimiert.

## Beschreibung

### Gebiet der Erfindung

Die Erfindung betrifft einen Oxidationsreaktor zur Partialoxidation eines Einsatzstroms mit einem Sauerstoff enthaltenden Oxidationsmittelstrom zu einem Wasserstoff enthaltenden Produktstrom. Die Partialoxidation kann dabei als nichtkatalytische Partialoxidation (POX) oder als autothermes Reformieren (ATR) durchgeführt werden. Als Einsatzströme kommen dabei kohlenwasserstoffhaltige Ströme, aber auch Ammoniak enthaltende Ströme in Frage.

Die Erfindung betrifft weiterhin ein Verfahren zum Herstellen eines Rohsynthesegasstroms aus einem Kohlenwasserstoffe enthaltenden Einsatzstrom und einem Sauerstoff enthaltenden Oxidationsmittelstrom mittels nichtkatalytischer Partialoxidation oder mittels autothermem Reformieren sowie ein Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom. Die Erfindung betrifft ferner entsprechende Verwendungen des vorgeschlagenen Oxidationsreaktors.

### Stand der Technik

Als Synthesegase bezeichnet man Wasserstoff und Kohlenoxide enthaltende Gasgemische, die in verschiedenen Synthesereaktionen Verwendung finden. Beispiele hierfür sind die Methanolsynthese, die Herstellung von Ammoniak nach dem Haber-Bosch-Verfahren oder die Fischer-Tropsch-Synthese. Klassische Wege zur Herstellung wasserstoffhaltiger Synthesegase umfassen die Dampfreformierung, das autotherme Reformieren (ATR) und die nichtkatalytische Partialoxidation (POX), wobei jeweils kohlenwasserstoffhaltige Einsatzmaterialien als Eduktströme verwendet werden. ATR und POX werden dabei in konstruktiv ähnlichen Oxidationsreaktoren durchgeführt, die sich im Wesentlichen durch das Vorhandensein einer Katalysatorschicht im unteren Teil des Oxidationsreaktors beim Autothermreformer unterscheiden.

Typischerweise wird die partielle Oxidation von kohlenwasserstoffhaltigem Einsatzmaterial zur Erzeugung von Synthesegas bei hohen Reaktortemperaturen im Bereich von 1000 °C bis 1500 °C und Drücken von bis zu 100 bara durchgeführt. Als Oxidationsreaktoren für die nichtkatalytische partielle Oxidation (POX-Reaktoren) werden häufig feuerfest ausgekleidete Reaktoren mit halbkugelförmigen oder annähernd halbkugelförmigen Kuppeln verwendet. Der Partialoxidationsbrenner (POX-Brenner) ist dabei in der Regel oben an der Kuppel, bevorzugt an deren Pol angebracht und dient zum Einleiten des kohlenwasserstoffhaltigem Einsatzmaterials, des Sauerstoff enthaltenden Oxidationsmittels sowie - optional - eines oder mehrerer Moderatorströme.

Bei den aus dem Stand der Technik bekannten technischen Verfahren und Vorrichtungen zur Partialoxidation werden verschiedene Vorrichtungen zum Einleiten und Mischen der verschiedenen Ströme, also das kohlenwasserstoffhaltige Einsatzmaterial, ein in der Regel Sauerstoff enthaltendes Oxidationsmittel und manchmal ein Moderator vorgeschlagen. Als Moderator wird häufig Kohlendioxid (CO₂) oder Wasserdampf verwendet, wobei der Moderator über einen separaten Kanal innerhalb des Brenners separat in den Reaktor eingespeist oder stromaufwärts des Brenners einem oder mehreren der anderen Einsatzströme zugemischt wird. Als Oxidationsmittel wird typischerweise Luft, mit Sauerstoff angereicherte Luft oder reiner Sauerstoff mit mindestens 95 mol% Sauerstoff eingesetzt. Ein kohlenwasserstoffhaltiger Einsatzstrom ist in einem Beispiel ein Strom, der Kohlenwasserstoffe wie Methan oder höhere Kohlenwasserstoffe oder andere wasserstoff- und kohlenstoffhaltige Moleküle enthält, beispielsweise Alkohole wie Methanol oder Ethanol. Dies kann auch ein Strom sein, der von einem vorgeschalteten Primärreformer erhalten wird und neben Kohlenmonoxid (CO), Wasserstoff (H₂), Kohlendioxid (CO₂) und Wasser (H₂O) auch Kohlenwasserstoffe wie Methan, Ethan, Ethylen oder höhere Kohlenwasserstoffe wie Benzol, Toluol oder Xylole enthält. Die Vermischung des kohlenwasserstoffhaltigen Einsatzmaterials und des Oxidationsmittels erfolgt in der Regel in einem Reaktor in unmittelbarer Nähe der Einspritzdüsen.

Der grundsätzliche Aufbau und die Verwendung von Oxidationsreaktoren der beschriebenen Art sind aus dem Schrifttum an sich bekannt und werden beispielsweise in dem Artikel "Gas Production", Ullmann's Encyclopedia of Industrial Chemistry, Sixth Edition, 1998 Electronic Release, beschreibt in Kapitel 2.5 "Autothermal Catalytic Reforming" bzw. Kapitel 3. "Noncatalytic Partial Oxidation" beschrieben. Beide Reaktortypen weisen einen drucktragenden Reaktormantel aus einem in der Regel metallischen Werkstoff auf, der auf seiner Innenseite mit einer oder mehreren Schichten feuerfesten Materials, beispielsweise feuerfester Steine, ausgekleidet ist, die somit Schutzschichten gegen die im Reaktorinneren freigesetzte Wärme und gegebenenfalls gegen korrosive Gasbestandteile bilden.

Als Ausgangsstrom zur Erzeugung eines wasserstoffhaltigen Gases wird im neueren Schrifttum auch ein Ammoniak enthaltender Einsatzstrom vorgeschlagen, der mit einem Sauerstoff enthaltenden Oxidationsmittelstrom und optional einem Dampfstrom zu einem Wasserstoff enthaltenden Produktgas umgesetzt wird. Die Umsetzung kann dabei beispielsweise wiederum nach dem Prinzip der nichtkatalytischen Partialoxidation oder nach dem Prinzip des autothermen Reformierens in jeweils geeigneten Oxidationsreaktoren erfolgen.

Die aus dem Stand der Technik bekannten Oxidationsreaktoren, insbesondere POX-Reaktoren oder Autothermreformer, sind hohen thermischen Belastungen ausgesetzt. Um den drucktragenden Reaktormantel gegen diese hohen thermischen Belastungen und die Einwirkung einer korrosiven Gasatmosphäre zu schützen, wird der Reaktormantel häufig auf seiner Innenseite mit einer thermischen Schutzschicht aus feuerfesten Ziegeln zugestellt oder ausgemauert. Nachteilig ist es dabei, dass es beim Aufheizen oder Abkühlen des Oxidationsreaktors aufgrund der thermischen Expansion oder Kontraktion zu einem Reißen oder Brechen der feuerfesten Ziegel kommt.

### Beschreibung der Erfindung

Die Aufgabe der vorliegenden Erfindung besteht daher darin, einen Oxidationsreaktor zur Partialoxidation eines Einsatzstroms mit einem Sauerstoff enthaltenden Oxidationsmittelstrom zu einem Wasserstoff enthaltenden Produktstrom anzugeben, der die erwähnten Nachteile der aus dem Stand der Technik bekannten Oxidationsreaktoren nicht aufweist und dessen Ausgestaltung es insbesondere verhindert, dass es beim Aufheizen oder Abkühlen des Oxidationsreaktors aufgrund der thermischen Expansion oder Kontraktion zu einem Reißen oder Brechen der feuerfesten Ziegel kommt.

Diese Aufgabe wird in einem ersten Aspekt der Erfindung durch einen Oxidationsreaktor mit den Merkmalen des Anspruchs 1 gelöst.

In weiteren Aspekten wird die Aufgabe gelöst durch Verwendungen des Oxidationsreaktors mit den Merkmalen der Ansprüche 10 bis 13.

In weiteren Aspekten wird die Aufgabe gelöst durch ein Verfahren zum Herstellen eines Rohsynthesegasstroms aus einem Kohlenwasserstoffe enthaltenden Einsatzstrom und einem Sauerstoff enthaltenden Oxidationsmittelstrom mittels nichtkatalytischer Partialoxidation gemäß Anspruch 14 oder mittels autothermem Reformieren gemäß Anspruch 15 sowie durch ein Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom gemäß Anspruch 16 oder mittels autothermem Reformieren gemäß Anspruch 17.

In weiteren Aspekten wird die Aufgabe gelöst durch weitere Ausgestaltungen der Erfindung, die sich aus den Unteransprüchen der jeweiligen Kategorie ergeben.

Unter einem sauerstoffhaltigen Oxidationsmittel ist jedes sauerstoffhaltige Fluid zu verstehen, wie z. B. reiner Sauerstoff mit beliebigem Reinheitsgrad, Luft oder jedes andere Fluid, das in der Lage ist, einem Reaktanten Sauerstoff zuzuführen.

Unter einem Mittel ist eine Sache zu verstehen, die die Erreichung eines Ziels ermöglicht oder dabei hilfreich ist. Insbesondere sind unter Mitteln zur Durchführung eines bestimmten Verfahrensschritts alle physischen Gegenstände zu verstehen, die ein Fachmann zur Durchführung dieses Verfahrensschritts in Betracht ziehen würde. Beispielsweise wird der Fachmann unter Mitteln zum Einleiten oder Ausleiten eines Stoffstroms alle Transport- und Fördereinrichtungen, also z.B. Rohrleitungen, Pumpen, Kompressoren, Ventile, verstehen, die ihm zur Durchführung dieses Verfahrensschrittes auf Grund seiner Fachkenntnisse notwendig oder sinnvoll erscheinen.

Im Sinne dieser Beschreibung ist Dampf als Synonym für Wasserdampf zu verstehen, sofern nicht im Einzelfall etwas anderes angegeben ist. Im Gegensatz dazu bezieht sich der Begriff "Wasser" auf Wasser im flüssigen Zustand, sofern im Einzelfall nichts anderes angegeben ist.

Drücke werden, falls benötigt, in absoluten Druckeinheiten, kurz bara oder bar(a), oder in Überdruckeinheiten, kurz barg oder bar(g), angegeben, sofern im Einzelfall nichts anderes angegeben ist.

Unter einer Fluidverbindung zwischen zwei Bereichen der erfindungsgemäßen Vorrichtung oder Anlage ist jede Art von Verbindung zu verstehen, die es ermöglicht, dass ein Fluid, z. B. ein Gasstrom, von dem einen in den anderen der beiden Bereiche strömen kann, wobei zwischengeschaltete Bereiche oder Bauteile vernachlässigt werden. Unter einer direkten Fluidverbindung ist insbesondere jede Art von Verbindung zu verstehen, die es ermöglicht, dass ein Fluid, z. B. ein Gasstrom, direkt von dem einen in den anderen der beiden Bereiche strömt, wobei keine weiteren Bereiche oder Komponenten zwischengeschaltet sind, mit Ausnahme von reinen Transportvorgängen und den dafür erforderlichen Mitteln, z. B. Rohrleitungen, Ventile, Pumpen, Kompressoren, Speicher. Ein Beispiel wäre eine Rohrleitung, die direkt von dem einen in den anderen der beiden Bereiche führt.

Optional oder wahlweise bedeutet, dass das nachfolgend beschriebene Ereignis oder die Umstände eintreten oder nicht eintreten können oder bei denen ein Merkmal vorhanden sein kann oder nicht vorhanden sein kann. Die Beschreibung umfasst Fälle, in denen das Ereignis oder der Umstand eintritt, und Fälle, in denen es/er nicht eintritt. Ebenso umfasst die Beschreibung Fälle, in denen ein Merkmal vorhanden ist oder nicht vorhanden ist.

Die Bedingungen der nichtkatalytischen Partialoxidation und des autothermen Reformierens sind dem Fachmann aus dem Stand der Technik, beispielsweise den eingangs erörterten Dokumenten, bekannt. Es sind diejenigen physikalisch-chemischen Bedingungen, unter denen ein messbarer, bevorzugt ein technisch relevanter Umsatz von fluiden oder fluidisierten kohlenstoffhaltigen Einsatzstoffströmen zu Synthesegasprodukten erzielt wird. Hierzu zählen als wichtige Parameter das Einstellen einer geeigneten Partialoxidationstemperatur von typischerweise rund 1000 °C oder darüber. Insbesondere ist es kennzeichnend für die nichtkatalytische Partialoxidation, dass kein Katalysator indem Partialoxidationsreaktor vorhanden ist. Im Gegensatz hierzu ist es ein Kennzeichen des autothermen Reformierens, dass im unteren Teil des Oxidationsreaktors eine Schicht eines speziellen, aber an sich bekannten und im Handel erhältlichen ATR-Katalysators vorhanden ist.

Notwendige Anpassungen der Bedingungen der nichtkatalytischen Partialoxidation und des autothermen Reformierens an die jeweiligen Betriebserfordernisse wird der Fachmann auf der Grundlage von Routineversuchen vornehmen. Dabei können ggf. offenbarte, spezifische Reaktionsbedingungen als Orientierung dienen, sie sind aber in Bezug auf den Umfang der Erfindung nicht einschränkend zu verstehen.

Die Begriffe Eingang, Einlass, Ausgang, Auslass beziehen sich auf die Strömungsrichtung der Einsatzstoffe durch den Oxidationsreaktor.

Der Begriff "Ziegel" oder "feuerfeste Ziegel" ist für die Zwecke dieser Offenbarung synonym mit den Begriffen "Steine" oder "feuerfeste Steine" zu verstehen.

Der Erfindung liegt die Erkenntnis zugrunde, dass die Nachteile der bislang aus dem Stand der Technik bekannten Oxidationsreaktoren vermieden werden können, wenn folgende Überlegungen berücksichtigt werden:

Zur inneren Isolierung von Hochtemperaturreaktoren (z. B. über 800 °C), insbesondere von Oxidationsreaktoren, wird häufig eine mehrschichtige feuerfeste Auskleidung mit einer Wandstärke von typischerweise 200 bis 600 mm verwendet. Solche feuerfesten Auskleidungen können aus monolithischen gießbaren Schichten, Stein- bzw. Ziegelschichten oder einer Kombination beider bestehen. Aufgrund der hohen Temperaturen ist die thermische Ausdehnung der einzelnen Feuerfestschichten von großer Bedeutung. Neben der Längsausdehnung muss auch die radiale Ausdehnung aufgrund der Umfangsausdehnung der Schichten berücksichtigt werden.

Während gießbare Schichten, die typischerweise nur als Stützschichten in kälteren Bereichen von Oxidationsreaktoren verwendet werden, die relativ geringe thermische Ausdehnung in diesen kälteren Abschnitten durch die Bildung einer größeren Anzahl kleiner Diskontinuitäten wie Risse kompensieren können, stellen Ziegel - insbesondere wenn sie als Heißdeckschicht (Schicht mit der höchsten Temperatur, die dem Inneren des Reaktors zugewandt ist) verwendet werden - ein besonderes Problem in Bezug auf Ausdehnung bzw. thermisches Wachstum und mechanische Integrität dar.

Andererseits können die in den gießbaren Stützschichten auftretenden Diskontinuitäten ein Risiko für die Bildung von heißen Zonen (Hotspots) an der Außenwand des Reaktormantels darstellen, verursacht durch heißes Gas, das durch die Diskontinuitäten strömt. Dies kann durch die Verwendung eines vollständig ausgemauerten feuerfesten Systems, beispielsweise mit mehrschichtige Ausmauerung, abgemildert werden.

Um einen Bruch aufgrund der Umfangsausdehnung zu vermeiden, werden gemäß der Erfindung in der Regel entweder ringspaltförmige Expansionslücken zwischen Reaktormantel und Ziegelschicht bzw. zwischen den verschiedenen Ziegelschichten oder alternativ oder zusätzlich Leerfugen als Expansionslücken in einer Ziegelreihe, bevorzugt periodisch umlaufende Leerfugen, innerhalb jeder Ziegelschicht verwendet. Ringspaltförmige Expansionslücken sind Fugen, die in radialer Richtung genügend Platz für die Ausdehnung bieten. Leerfugen als Expansionslücken in einer Ziegelreihe, insbesondere bei periodisch umlaufender Anordnung, verringern die radiale Ausdehnung, indem sie den Ziegeln in Umfangsrichtung Raum zur Ausdehnung lassen.

Leerfugen, insbesondere periodische Leerfugen, ermöglichen einen dichten Aufbau der Schichten, da sie die radiale Bewegung begrenzen und stattdessen eine Bewegung in Umfangsrichtung zulassen. Allerdings ist das Schließen der Leerfugen bei hohen Temperaturen wichtig für eine dichte Schicht. Daher werden bevorzugt Leerfugen, insbesondere in der innersten, dem heißen Gas zugewandten Ziegelschicht, mit einem Füllmaterial wie Keramikpapier gefüllt, um zu vermeiden, dass sich Fremdstoffe wie Katalysatoren in den Leerfugen festsetzen. Eingeschlossenes Fremdmaterial würde die Leerfugen funktionsuntüchtig machen und könnte zu einer erhöhten Umfangsausdehnung führen, die mechanische Spannungen verursacht und zu einer Beschädigung der feuerfesten Ziegel führt. In der innersten Schicht sind vergleichsweise viele Leerfugen erforderlich, um der hohen Wärmeausdehnung Rechnung zu tragen, was das Risiko einer Verstopfung der Leerfugen erhöht.

Ringspaltförmige Expansionslücken hingegen benötigen keine Lücken in der Auskleidung und sind abgedichtet. Daher verhindern sie in der Regel ein Verstopfen durch z. B. Katalysatorpartikel. Sie sind allerdings hinsichtlich der Installation aufwändiger als Leerfugen.

Durch die Kombination von Leerfugen und ringspaltförmigen Expansionslücken können insbesondere für mehrschichtige Ziegelanordnungen die Vorteile der Erfindung weiter erhöht werden.

### Bevorzugte Ausgestaltungen der Erfindung

Ein zweiter Aspekt der Erfindung ist dadurch gekennzeichnet, dass die feuerfesten Ziegel in der mindestens einen Schutzschicht so angebracht sind, dass in einer Ziegelreihe in Umfangsrichtung eine Vielzahl von Leerfugen als Expansionslücken angeordnet sind. Hierdurch sind die Ziegel innerhalb einer Ziegelreihe in Umfangsrichtung des Oxidationsreaktors bewegbar, so dass mechanische Spannungen infolge thermischer Expansion zwischen benachbarten Ziegeln innerhalb einer Ziegelreihe beim Aufheizen des Oxidationsreaktors und/oder thermischer Kontraktion beim Abkühlen des Oxidationsreaktors vermieden oder zumindest minimiert werden.

Ein dritter Aspekt der Erfindung ist dadurch gekennzeichnet, dass im Inneren des Reaktormantels eine Schutzschicht aus feuerfesten Ziegeln angebracht ist und dass zwischen Reaktormantel und Schutzschicht eine ringspaltförmige Expansionslücke angeordnet ist. Hierdurch sind die Ziegel zwischen zwei benachbarten Ziegelreihen in Radialrichtung des Oxidationsreaktors bewegbar, so dass mechanische Spannungen infolge thermischer Expansion zwischen Ziegeln in der wandnächsten Ziegelreihe und der Innenwand des Reaktormantels beim Aufheizen des Oxidationsreaktors und/oder thermischer Kontraktion beim Abkühlen des Oxidationsreaktors vermieden oder zumindest minimiert werden.

Ein vierter Aspekt der Erfindung ist dadurch gekennzeichnet, dass im Inneren des Reaktormantels mindestens zwei Schutzschichten aus feuerfesten Ziegeln angebracht sind und dass zwischen Reaktormantel und Schutzschicht und/oder zwischen zwei Schutzschichten eine ringspaltförmige Expansionslücke angeordnet ist. Hierdurch sind die Ziegel zwischen zwei benachbarten Ziegelreihen in Radialrichtung des Oxidationsreaktors bewegbar, so dass mechanische Spannungen infolge thermischer Expansion zwischen Ziegeln in benachbarten Ziegelreihen beim Aufheizen des Oxidationsreaktors und/oder thermischer Kontraktion beim Abkühlen des Oxidationsreaktors vermieden oder zumindest minimiert werden.

Ein fünfter Aspekt der Erfindung ist dadurch gekennzeichnet, dass sowohl eine Vielzahl von Leerfugen als Expansionslücken in einer Ziegelreihe als auch mindestens eine ringspaltförmige Expansionslücke zwischen Reaktormantel und Schutzschicht und/oder zwischen zwei Schutzschichten vorhanden sind. Hierdurch werden die Vorteile des zweiten, dritten und vierten Aspekts der Erfindung miteinander verbunden und es wird eine nochmals bessere Minimierung der mechanischen Spannungen zwischen den feuerfesten Ziegeln erhalten.

Ein sechster Aspekt der Erfindung ist dadurch gekennzeichnet, dass die feuerfesten Ziegel in zwei in Längsrichtung des Oxidationsreaktors aufeinanderfolgenden Ziegelreihen versetzt angeordnet sind, bevorzugt im Halbverband versetzt angeordnet sind. Hierdurch wird eine erhöhte Stabilität der feuerfesten Ausmauerung in Längsrichtung des Oxidationsreaktors erhalten. Insbesondere die Anordnung aufeinanderfolgenden Ziegelreihen im Halbverband bietet Vorteile, da die statische Stabilität der Ausmauerung auch bei relativ hoher Bewegung innerhalb einer Ziegelreihe gegeben ist, weil die Kante eines Ziegels in einer Ziegelreihe in der Mitte der Ziegel in den Nachbarreihen angeordnet ist, so dass auch bei hoher Relativbewegung des betrachteten Ziegels immer noch eine Überdeckung mit den Ziegeln in den Nachbarreihen gegeben ist.

Ein siebter Aspekt der Erfindung ist dadurch gekennzeichnet, dass das Einlassende kegelstumpfförmig ausgestaltet ist und an seinem engen Ende mit dem Brenner gasdicht verbunden ist und an seinem weiten Ende mit dem hauptsächlich zylinderförmigen Reaktormantel gasdicht verbunden ist.

Ein achter Aspekt der Erfindung ist dadurch gekennzeichnet, dass die Ziegel in der mindestens einen Schutzschicht so angebracht sind, dass die Schutzschicht bei thermischer Expansion in Radialrichtung entlang einer Querachse des Oxidationsreaktors und in Axialrichtung entlang der Längsachse des Oxidationsreaktors bewegbar ist. Auf diese Weise wird auch mechanischen Spannungen Rechnung getragen, die durch thermische Expansion bzw. Kontraktion in entlang der Längsachse des Oxidationsreaktors entstehen.

Ein neunter Aspekt der Erfindung ist dadurch gekennzeichnet, dass ein Teil der Reaktionskammer mit einer Schüttung eines festen, partikelförmigen, für das autotherme Reformieren (ATR) aktiven Katalysators gefüllt ist.

Ein zehnter Aspekt der Erfindung betrifft die Verwendung eines Oxidationsreaktors nach Anspruch 1 bis 8 für die nichtkatalytische Partialoxidation (POX) eines Kohlenwasserstoffe enthaltenden Einsatzstroms zu einem Wasserstoff und Kohlenoxide enthaltenden Produktstrom.

Ein elfter Aspekt der Erfindung betrifft die Verwendung eines Oxidationsreaktors nach Anspruch 9 für das autotherme Reformieren (ATR) eines Kohlenwasserstoffe enthaltenden Einsatzstroms zu einem Wasserstoff und Kohlenoxide enthaltenden Produktstrom.

Ein zwölfter Aspekt der Erfindung betrifft die Verwendung eines Oxidationsreaktors nach Anspruch 1 bis 8 für die Partialoxidation eines Ammoniak enthaltenden Einsatzstroms zu einem Wasserstoff und Stickstoff enthaltenden Produktstrom.

Ein dreizehnter Aspekt der Erfindung betrifft die Verwendung eines Oxidationsreaktors nach Anspruch 9 für das autotherme Reformieren (ATR) eines Ammoniak enthaltenden Einsatzstroms zu einem Wasserstoff und Stickstoff enthaltenden Produktstrom.

Ein vierzehnter Aspekt der Erfindung betrifft ein Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom, umfassend folgende Schritte:
(a) Bereitstellen eines Oxidationsreaktors nach Anspruch 1 bis 8;
(b) Einleiten des Kohlenwasserstoffe enthaltenden Einsatzstroms, des Sauerstoff enthaltenden Oxidationsmittelstroms und eines optionalen Moderatorstroms über den Brenner in die Reaktionskammer;
(c) Umsetzen des Kohlenwasserstoffe enthaltenden Einsatzstroms und des Sauerstoff enthaltenden Oxidationsmittelstroms im Brenner und/oder in der Reaktionskammer unter Bedingungen der nichtkatalytischen Partialoxidation (POX);
(d) Ausleiten des Wasserstoff und Kohlenoxide enthaltenden Produktstroms über den Auslass.

Ein fünfzehnter Aspekt der Erfindung betrifft ein Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom, umfassend folgende Schritte:
(a) Bereitstellen eines Oxidationsreaktors nach Anspruch 9;
(b) Einleiten des Kohlenwasserstoffe enthaltenden Einsatzstroms, des Sauerstoff enthaltenden Oxidationsmittelstroms und eines optionalen Moderatorstroms über den Brenner in die Reaktionskammer;
(c) Umsetzen des Kohlenwasserstoffe enthaltenden Einsatzstroms und des Sauerstoff enthaltenden Oxidationsmittelstroms im Brenner und/oder in der Reaktionskammer und/oder in der Katalysatorschüttung unter Bedingungen des autothermen Reformierens (ATR);
(d) Ausleiten des Wasserstoff und Kohlenoxide enthaltenden Produktstroms über den Auslass.

Ein sechzehnter Aspekt der Erfindung betrifft ein Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom, umfassend folgende Schritte:
(a) Bereitstellen eines Oxidationsreaktors nach Anspruch 1 bis 8;
(b) Einleiten des Ammoniak enthaltenden Einsatzstroms, des Sauerstoff enthaltenden Oxidationsmittelstroms und eines optionalen Moderatorstroms über den Brenner in die Reaktionskammer;
(c) Umsetzen des Ammoniak enthaltenden Einsatzstroms und des Sauerstoff enthaltenden Oxidationsmittelstroms im Brenner und/oder in der Reaktionskammer unter Bedingungen der nichtkatalytischen Partialoxidation von Ammoniak;
(d) Ausleiten des Wasserstoff und Stickstoff enthaltenden Produktstroms über den Auslass.

Ein siebzehnter Aspekt der Erfindung betrifft ein Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom, umfassend folgende Schritte:
(a) Bereitstellen eines Oxidationsreaktors nach Anspruch 9;
(b) Einleiten des Ammoniak enthaltenden Einsatzstroms, des Sauerstoff enthaltenden Oxidationsmittelstroms und eines optionalen Moderatorstroms über den Brenner in die Reaktionskammer;
(c) Umsetzen des Ammoniak enthaltenden Einsatzstroms und des Sauerstoff enthaltenden Oxidationsmittelstroms im Brenner und/oder in der Reaktionskammer unter Bedingungen des autothermen Reformierens (ATR) von Ammoniak;
(d) Ausleiten des Wasserstoff und Stickstoff enthaltenden Produktstroms über den Auslass.

### Ausführungsbeispiele

Weiterbildungen, Vorteile und Anwendungsmöglichkeiten der Erfindung ergeben sich auch aus der nachfolgenden Beschreibung von Ausführungsbeispielen und den Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:
- Fig. 1: eine schematische Darstellung einer ersten Ausgestaltung des Oxidationsreaktors gemäß der Erfindung;
- Fig. 2: eine schematische Darstellung einer zweiten Ausgestaltung des Oxidationsreaktors gemäß der Erfindung;
- Fig. 3: eine schematische Darstellung einer dritten Ausgestaltung des Oxidationsreaktors gemäß der Erfindung;
- Fig. 4: eine schematische Darstellung einer vierten Ausgestaltung des Oxidationsreaktors gemäß der Erfindung.

Im Folgenden ist die Angabe "nicht gezeigt" so zu verstehen, dass ein Element in der besprochenen Abbildung nicht grafisch dargestellt, aber gleichwohl vorhanden ist.

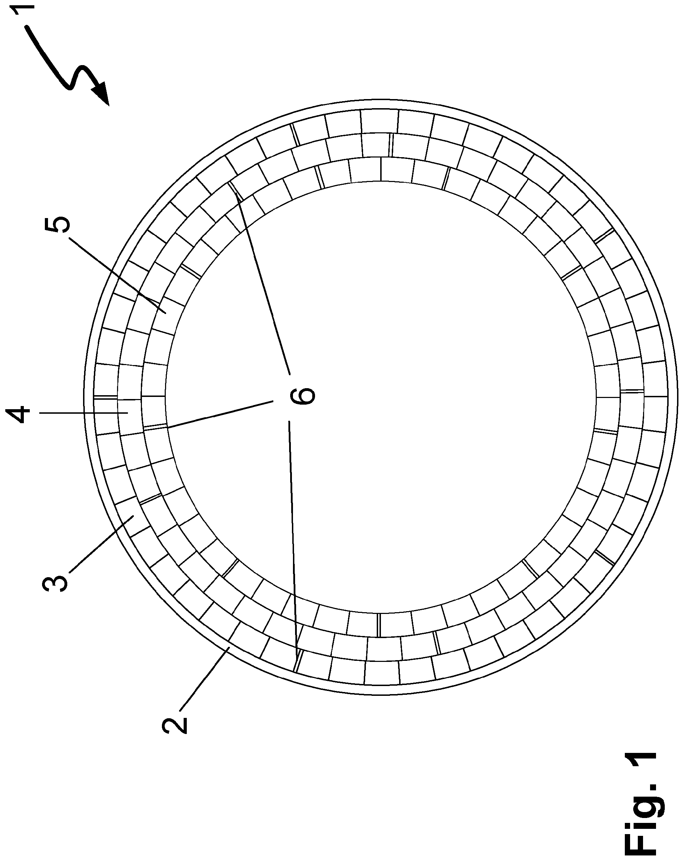

Fig. 1 zeigt eine schematische Darstellung eines Querschnitts durch einen erfindungsgemäßen Oxidationsreaktor 1 in einer ersten Ausgestaltung. Innerhalb eines Reaktormantels 2 ist eine äußere Schutzschicht 3 aus einer umlaufenden Reihe feuerfester Ziegel, eine mittlere Schutzschicht 4 aus einer umlaufenden Reihe feuerfester Ziegel und eine innere Schutzschicht 5 aus einer umlaufenden Reihe feuerfester Ziegel angeordnet. Alle drei Schutzschichten weisen Leerfugen 6 als Expansionslücken auf.

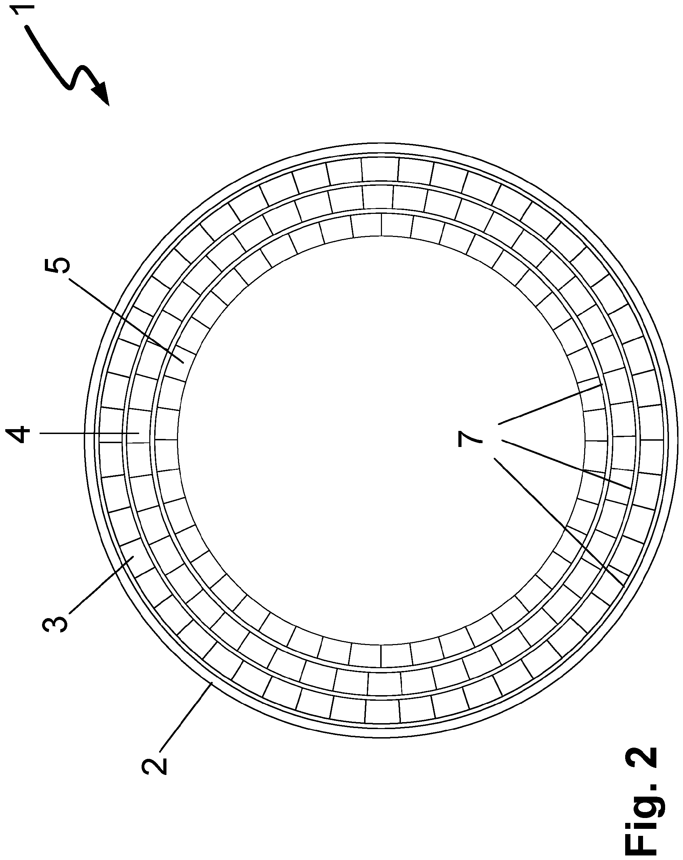

Fig. 2 zeigt eine schematische Darstellung eines Querschnitts durch einen erfindungsgemäßen Oxidationsreaktor 1 in einer zweiten Ausgestaltung. Innerhalb eines Reaktormantels 2 ist eine äußere Schutzschicht 3 aus einer umlaufenden Reihe feuerfester Ziegel, eine mittlere Schutzschicht 4 aus einer umlaufenden Reihe feuerfester Ziegel und eine innere Schutzschicht 5 aus einer umlaufenden Reihe feuerfester Ziegel angeordnet. Zwischen der Innenwand des Reaktormantels 2 und der äußeren Schutzschicht 3, zwischen der äußeren Schutzschicht 3 und der mittleren Schutzschicht 4 und zwischen der mittleren Schutzschicht 4 und der inneren Schutzschicht 5 ist jeweils eine ringspaltförmige Expansionslücke 7 angeordnet.

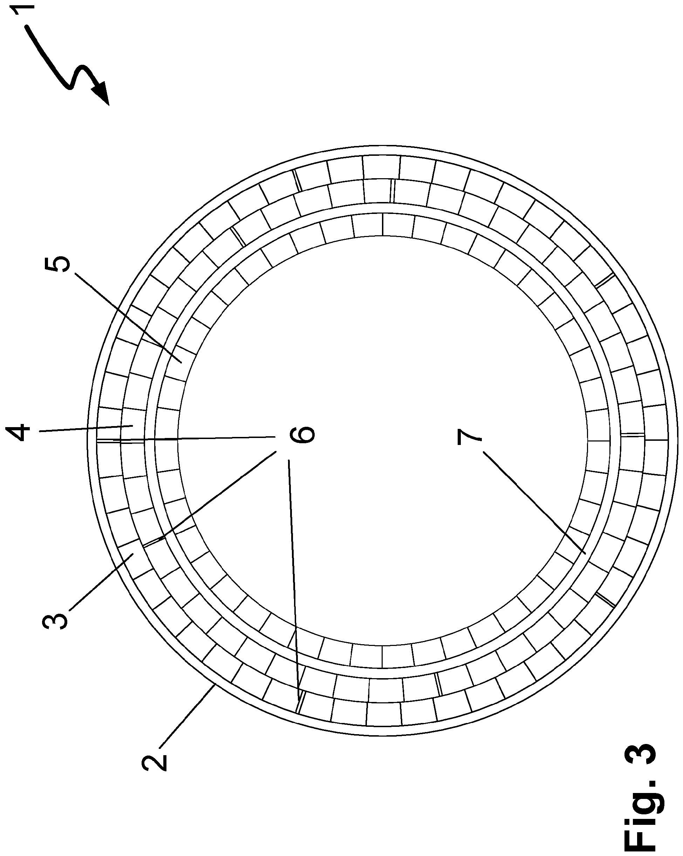

Fig. 3 zeigt eine schematische Darstellung eines Querschnitts durch einen erfindungsgemäßen Oxidationsreaktor 1 in einer dritten Ausgestaltung. Innerhalb eines Reaktormantels 2 ist eine äußere Schutzschicht 3 aus einer umlaufenden Reihe feuerfester Ziegel, eine mittlere Schutzschicht 4 aus einer umlaufenden Reihe feuerfester Ziegel und eine innere Schutzschicht 5 aus einer umlaufenden Reihe feuerfester Ziegel angeordnet. Die äußere Schutzschicht 3 und die mittlere Schutzschicht 4 weisen Leerfugen 6 als Expansionslücken auf. Zwischen der mittleren Schutzschicht 4 und der inneren Schutzschicht 5 ist eine ringspaltförmige Expansionslücke 7 angeordnet.

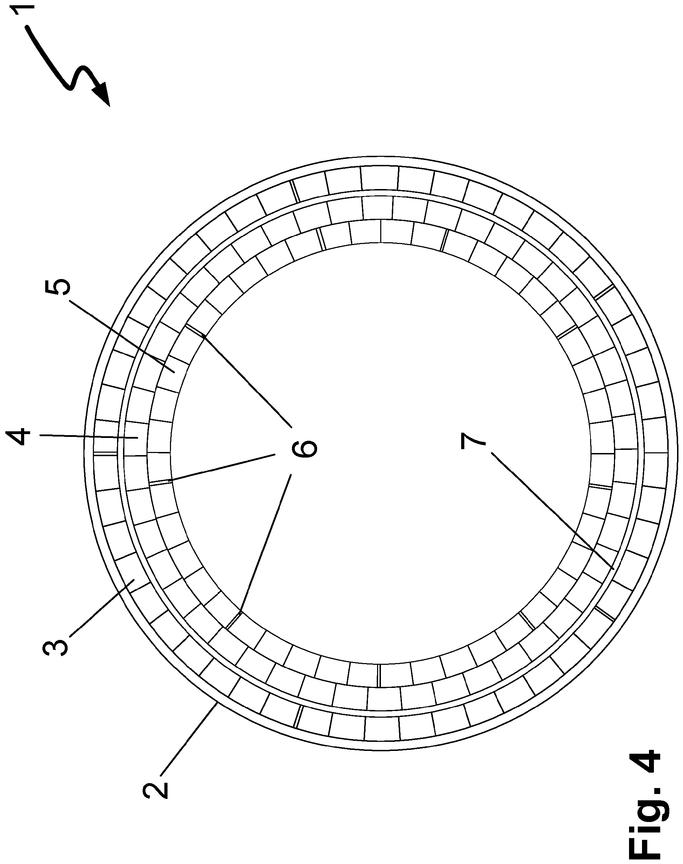

Fig. 4 zeigt eine schematische Darstellung eines Querschnitts durch einen erfindungsgemäßen Oxidationsreaktor 1 in einer vierten Ausgestaltung. Innerhalb eines Reaktormantels 2 ist eine äußere Schutzschicht 3 aus einer umlaufenden Reihe feuerfester Ziegel, eine mittlere Schutzschicht 4 aus einer umlaufenden Reihe feuerfester Ziegel und eine innere Schutzschicht 5 aus einer umlaufenden Reihe feuerfester Ziegel angeordnet. Die innere Schutzschicht 5 weist Leerfugen 6 als Expansionslücken auf. Zwischen der äußeren Schutzschicht 3 und der mittleren Schutzschicht 4 ist eine ringspaltförmige Expansionslücke 7 angeordnet.

In einem weiteren, nicht gezeigten Ausführungsbeispiel der Erfindung wird einer der in den Figuren 1 bis 4 gezeigten Oxidationsreaktoren für die nichtkatalytische Partialoxidation (POX) eines Kohlenwasserstoffe enthaltenden Einsatzstroms zu einem Wasserstoff und Kohlenoxide enthaltenden Produktstrom verwendet.

In einem weiteren, nicht gezeigten Ausführungsbeispiel der Erfindung wird einer der in den Figuren 1 bis 4 gezeigten Oxidationsreaktoren für die nichtkatalytische Partialoxidation (POX) eines Ammoniak enthaltenden Einsatzstroms zu einem Wasserstoff und Stickstoff enthaltenden Produktstrom verwendet.

In einem weiteren, nicht gezeigten Ausführungsbeispiel der Erfindung wird einer der in den Figuren 1 bis 4 gezeigten Oxidationsreaktoren für das autotherme Reformieren (ATR) eines Kohlenwasserstoffe enthaltenden Einsatzstroms zu einem Wasserstoff und Kohlenoxide enthaltenden Produktstrom verwendet.

In einem weiteren, nicht gezeigten Ausführungsbeispiel der Erfindung wird einer der in den Figuren 1 bis 4 gezeigten Oxidationsreaktoren für das autotherme Reformieren (ATR) eines Ammoniak enthaltenden Einsatzstroms zu einem Wasserstoff und Stickstoff enthaltenden Produktstrom verwendet.

Weitere nicht gezeigte Ausführungsbeispiele der Erfindung umfassen ein Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom, umfassend folgende Schritte:
(a) Bereitstellen eines Oxidationsreaktors nach Anspruch 1 bis 9;
(b) Einleiten des Kohlenwasserstoffe enthaltenden Einsatzstroms, des Sauerstoff enthaltenden Oxidationsmittelstroms und eines optionalen Moderatorstroms über den Brenner in die Reaktionskammer;
(c) Umsetzen des Kohlenwasserstoffe enthaltenden Einsatzstroms und des Sauerstoff enthaltenden Oxidationsmittelstroms im Brenner und/oder in der Reaktorkammerunter Bedingungen der nichtkatalytischen Partialoxidation (POX);
(d) Ausleiten des Wasserstoff und Kohlenoxide enthaltenden Produktstroms über den Auslass.

Weitere nicht gezeigte Ausführungsbeispiele der Erfindung umfassen ein Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom, umfassend folgende Schritte:
(a) Bereitstellen eines Oxidationsreaktors nach Anspruch 10;
(b) Einleiten des Kohlenwasserstoffe enthaltenden Einsatzstroms, des Sauerstoff enthaltenden Oxidationsmittelstroms und eines optionalen Moderatorstroms über den Brenner in die Reaktionskammer;
(c) Umsetzen des Kohlenwasserstoffe enthaltenden Einsatzstroms und des Sauerstoff enthaltenden Oxidationsmittelstroms im Brenner und/oder in der Reaktorkammer und/oder in der Katalysatorschüttung unter Bedingungen des autothermen Reformierens (ATR);
(d) Ausleiten des Wasserstoff und Kohlenoxide enthaltenden Produktstroms über den Auslass.

Weitere nicht gezeigte Ausführungsbeispiele der Erfindung umfassen ein Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom, umfassend folgende Schritte:
(a) Bereitstellen eines Oxidationsreaktors nach Anspruch 1 bis 9;
(b) Einleiten des Ammoniak enthaltenden Einsatzstroms, des Sauerstoff enthaltenden Oxidationsmittelstroms und eines optionalen Moderatorstroms über den Brenner in die Reaktionskammer, optional Einleiten eines Dampfstroms in die Reaktionskammer;
(c) Umsetzen des Ammoniak enthaltenden Einsatzstroms und des Sauerstoff enthaltenden Oxidationsmittelstroms im Brenner und/oder in der Reaktorkammerunter Bedingungen der nichtkatalytischen Partialoxidation von Ammoniak;
(d) Ausleiten des Wasserstoff und Stickstoff enthaltenden Produktstroms über den Auslass.

Weitere nicht gezeigte Ausführungsbeispiele der Erfindung umfassen ein Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom, umfassend folgende Schritte:
(a) Bereitstellen eines Oxidationsreaktors nach Anspruch 10;
(b) Einleiten des Ammoniak enthaltenden Einsatzstroms, des Sauerstoff enthaltenden Oxidationsmittelstroms und eines optionalen Moderatorstroms über den Brenner in die Reaktionskammer;
(c) Umsetzen des Ammoniak enthaltenden Einsatzstroms und des Sauerstoff enthaltenden Oxidationsmittelstroms im Brenner und/oder in der Reaktorkammer und/oder in der Katalysatorschüttung unter Bedingungen des autothermen Reformierens (ATR);
(d) Ausleiten des Wasserstoff und Stickstoff enthaltenden Produktstroms über den Auslass.

### Zahlenbeispiel

Bei der Ausdehnung einer solchen mehrschichtigen Ausmauerung unterliegt die innere Ausmauerung einem höheren thermischen Wachstum als die nachfolgenden Sicherungsschichten, was zu einem deutlich erhöhten Bedarf an Dehnungszuschlag führt. In der nachfolgenden Tabelle sind für einen Oxidationsreaktor mit drei konzentrischen Schichten feuerfester Ziegel typische Veränderungen des relativen Durchmessers bezogen auf den Durchmesser bei Umgebungstemperatur wiedergegeben, wenn der Oxidationsreaktor auf eine Temperatur von 1300 °C aufgeheizt wird.

| | Reaktormantel | Äußere Schicht | Mittlere Schicht | Innerste Schicht |
|---|---|---|---|---|
| Relative Änderung Durchmesser [%] | 0,19 % | 0,19 % | 0,58 % | 0,91 % |

Wie zu erkennen ist, ist besonders die relative Änderung des Durchmessers für die innerste Schicht feuerfester Ziegel bedeutend. Mit der Erfindung gelingt es wirkungsvoll, die relative Änderung des Durchmessers gerade für die am stärksten von thermischer Ausdehnung oder Kontraktion betroffenen Ziegelreihen bzw. Ziegelschichten zu verringern und dadurch mechanische Spannungen innerhalb der feuerfesten Ausmauerung zu reduzieren.

Änderungen an den im Vorstehenden beschriebenen Ausführungsformen oder Ausgestaltungen der vorliegenden Offenbarung sind möglich, ohne den durch die beigefügten Ansprüche definierten Umfang der vorliegenden Offenbarung zu verlassen. Ausdrücke wie "einschließlich", "umfassend", "enthaltend", "haben", "ist", die zur Beschreibung und Beanspruchung der vorliegenden Offenbarung verwendet werden, sind in einer nicht ausschließenden Weise zu verstehen, d. h. sie lassen zu, dass auch nicht ausdrücklich beschriebene Gegenstände, Komponenten oder Elemente vorhanden sind. Verweise auf die Einzahl sind so zu verstehen, dass sie sich auch auf die Mehrzahl beziehen, sofern es im Einzelfall nicht ausdrücklich anders angegeben wird.

### Bezugszeichenliste

- [1]: Oxidationsreaktor (Querschnitt)
- [2]: Reaktormantel
- [3]: äußerste Schutzschicht (Ziegelschicht)
- [4]: mittlere Schutzschicht (Ziegelschicht)
- [5]: innerste Schutzschicht (Ziegelschicht)
- [6]: Leerfuge als Expansionslücke
- [7]: ringspaltförmige Expansionslücke

## Patentansprüche

1. Oxidationsreaktor zur Partialoxidation eines Einsatzstroms mit einem Sauerstoff enthaltenden Oxidationsmittelstrom zu einem Wasserstoff enthaltenden Produktstrom, umfassend:
(a) einen aus einem metallischen Werkstoff bestehenden, hauptsächlich zylinderförmigen, eine Längsachse aufweisenden, drucktragenden Reaktormantel;
(b) mindestens eine im Inneren des Reaktormantels angebrachte Schutzschicht aus feuerfesten Ziegeln;
(c) wobei die Ziegel in der mindestens einen Schutzschicht so angebracht sind, dass die Schutzschicht bei thermischer Expansion in Radialrichtung bewegbar ist;
(d) ein im Inneren der mindestens einen Schutzschicht angeordnetes Leervolumen als Reaktionskammer;
(e) einen an einem Einlassende des Reaktormantels angebrachten Einlass für den Einsatzstrom, wobei der Einlass als Brenner ausgestaltet ist, durch den der Kohlenwasserstoffe enthaltende Einsatzstrom, der Sauerstoff enthaltende Oxidationsmittelstrom und ein optionaler Moderatorstrom in die Reaktionskammer einleitbar sind;
(f) einen an einem Auslassende des Reaktormantels angebrachten Auslass, durch den der Produktstrom ausleitbar ist.

2. Oxidationsreaktor nach Anspruch 1, **dadurch gekennzeichnet, dass** die feuerfesten Ziegel in der mindestens einen Schutzschicht so angebracht sind, dass in einer Ziegelreihe in Umfangsrichtung eine Vielzahl von Leerfugen als Expansionslücken angeordnet sind.

3. Oxidationsreaktor nach Anspruch 1, **dadurch gekennzeichnet, dass** im Inneren des Reaktormantels eine Schutzschicht aus feuerfesten Ziegeln angebracht ist und dass zwischen Reaktormantel und Schutzschicht eine ringspaltförmige Expansionslücke angeordnet ist.

4. Oxidationsreaktor nach Anspruch 1, **dadurch gekennzeichnet, dass** im Inneren des Reaktormantels mindestens zwei Schutzschichten aus feuerfesten Ziegeln angebracht sind und dass zwischen Reaktormantel und Schutzschicht und/oder zwischen zwei Schutzschichten eine ringspaltförmige Expansionslücke angeordnet ist.

5. Oxidationsreaktor nach einem der Ansprüche 1 bis 4, **dadurch gekennzeichnet, dass** sowohl eine Vielzahl von Leerfugen als Expansionslücken in einer Ziegelreihe als auch mindestens eine ringspaltförmige Expansionslücke zwischen Reaktormantel und Schutzschicht und/oder zwischen zwei Schutzschichten vorhanden sind.

6. Oxidationsreaktor nach einem der vorigen Ansprüche, **dadurch gekennzeichnet, dass** die feuerfesten Ziegel in zwei in Längsrichtung des Oxidationsreaktors aufeinanderfolgenden Ziegelreihen versetzt angeordnet sind, bevorzugt im Halbverband versetzt angeordnet sind.

7. Oxidationsreaktor nach einem der vorigen Ansprüche, **dadurch gekennzeichnet, dass** das Einlassende kegelstumpfförmig ausgestaltet ist und an seinem engen Ende mit dem Brenner gasdicht verbunden ist und an seinem weiten Ende mit dem hauptsächlich zylinderförmigen Reaktormantel gasdicht verbunden ist.

8. Oxidationsreaktor nach einem der vorigen Ansprüche, **dadurch gekennzeichnet, dass** die Ziegel in der mindestens einen Schutzschicht so angebracht sind, dass die Schutzschicht bei thermischer Expansion in Radialrichtung entlang einer Querachse des Oxidationsreaktors und in Axialrichtung entlang der Längsachse des Oxidationsreaktors bewegbar ist.

9. Oxidationsreaktor nach einem der vorigen Ansprüche, **dadurch gekennzeichnet, dass** ein Teil der Reaktionskammer mit einer Schüttung eines festen, partikelförmigen, für das autotherme Reformieren (ATR) aktiven Katalysators gefüllt ist.

10. Verwendung eines Oxidationsreaktors nach Anspruch 1 bis 8 für die nichtkatalytische Partialoxidation (POX) eines Kohlenwasserstoffe enthaltenden Einsatzstroms zu einem Wasserstoff und Kohlenoxide enthaltenden Produktstrom.

11. Verwendung eines Oxidationsreaktors nach Anspruch 9 für das autotherme Reformieren (ATR) eines Kohlenwasserstoffe enthaltenden Einsatzstroms zu einem Wasserstoff und Kohlenoxide enthaltenden Produktstrom.

12. Verwendung eines Oxidationsreaktors nach Anspruch 1 bis 8 für die Partialoxidation eines Ammoniak enthaltenden Einsatzstroms zu einem Wasserstoff und Stickstoff enthaltenden Produktstrom.

13. Verwendung eines Oxidationsreaktors nach Anspruch 9 für das autotherme Reformieren (ATR) eines Ammoniak enthaltenden Einsatzstroms zu einem Wasserstoff und Stickstoff enthaltenden Produktstrom.

14. Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom, umfassend folgende Schritte:
(a) Bereitstellen eines Oxidationsreaktors nach Anspruch 1 bis 8;
(b) Einleiten des Kohlenwasserstoffe enthaltenden Einsatzstroms, des Sauerstoff enthaltenden Oxidationsmittelstroms und eines optionalen Moderatorstroms über den Brenner in die Reaktionskammer;
(c) Umsetzen des Kohlenwasserstoffe enthaltenden Einsatzstroms und des Sauerstoff enthaltenden Oxidationsmittelstroms im Brenner und/oder in der Reaktionskammer unter Bedingungen der nichtkatalytischen Partialoxidation (POX);
(d) Ausleiten des Wasserstoff und Kohlenoxide enthaltenden Produktstroms über den Auslass.

15. Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom, umfassend folgende Schritte:
(a) Bereitstellen eines Oxidationsreaktors nach Anspruch 9;
(b) Einleiten des Kohlenwasserstoffe enthaltenden Einsatzstroms, des Sauerstoff enthaltenden Oxidationsmittelstroms und eines optionalen Moderatorstroms über den Brenner in die Reaktionskammer;
(c) Umsetzen des Kohlenwasserstoffe enthaltenden Einsatzstroms und des Sauerstoff enthaltenden Oxidationsmittelstroms im Brenner und/oder in der Reaktionskammer und/oder in der Katalysatorschüttung unter Bedingungen des autothermen Reformierens (ATR);
(d) Ausleiten des Wasserstoff und Kohlenoxide enthaltenden Produktstroms über den Auslass.

16. Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom, umfassend folgende Schritte:
(a) Bereitstellen eines Oxidationsreaktors nach Anspruch 1 bis 8;
(b) Einleiten des Ammoniak enthaltenden Einsatzstroms, des Sauerstoff enthaltenden Oxidationsmittelstroms und eines optionalen Moderatorstroms über den Brenner in die Reaktionskammer;
(c) Umsetzen des Ammoniak enthaltenden Einsatzstroms und des Sauerstoff enthaltenden Oxidationsmittelstroms im Brenner und/oder in der Reaktionskammer unter Bedingungen der nichtkatalytischen Partialoxidation von Ammoniak;
(d) Ausleiten des Wasserstoff und Stickstoff enthaltenden Produktstroms über den Auslass.

17. Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom, umfassend folgende Schritte:
(a) Bereitstellen eines Oxidationsreaktors nach Anspruch 9;
(b) Einleiten des Ammoniak enthaltenden Einsatzstroms, des Sauerstoff enthaltenden Oxidationsmittelstroms und eines optionalen Moderatorstroms über den Brenner in die Reaktionskammer;
(c) Umsetzen des Ammoniak enthaltenden Einsatzstroms und des Sauerstoff enthaltenden Oxidationsmittelstroms im Brenner und/oder in der Reaktionskammer unter Bedingungen des autothermen Reformierens (ATR) von Ammoniak;
(d) Ausleiten des Wasserstoff und Stickstoff enthaltenden Produktstroms über den Auslass.
